# EUROPÄISCHE PATENTSCHRIFT

(11) **EP 2 181 872 B1**
(45) Veröffentlichungstag und Bekanntmachung des Hinweises auf die Patenterteilung: **07.09.2011**
(21) Anmeldenummer: 09013324.0
(22) Anmeldetag: 22.10.2009
(51) Int. Cl.: B60H 1/00

(54) **Vorrichtung zur Kühlung der Luft in dem Innenraum eines gepanzerten Fahrzeuges**
Device for cooling the air in the interior of an armoured vehicle
Dispositif de refroidissement de l'air à l'intérieur d'un véhicule blindé

(30) Priorität: 04.11.2008 DE 102008055849
(43) Veröffentlichungstag der Anmeldung: 05.05.2010
(73) Patentinhaber: Rheinmetall Landsysteme GmbH, 24107 Kiel (DE)
(72) Erfinder: Gieseler, Michael, 24251 Osdorf (DE); Molt, Helge, 24340 Eckernförde (DE)
(74) Vertreter: Dietrich, Barbara

(56) Entgegenhaltungen:
- EP-A1- 1 728 657
- DE-A1- 3 334 992
- DE-T2- 60 121 848
- US-A1- 2005 115 704

## Beschreibung

Die Erfindung betrifft eine Vorrichtung zur Kühlung der Luft in dem Innenraum eines gepanzerten Fahrzeuges mit den Merkmalen des Oberbegriffes des Anspruchs 1.

Aus der DE 33 34 992 A1 sind ein Verfahren und eine Vorrichtung zur Entfernung von Geruchsstoffen aus Zuluft von Fahrzeugkabinen durch katalytische Oxidation bekannt. Dazu wird die Zuluft über einen, vorzugsweise bereits im Kraftfahrzeug vorhandenen Heizungswärmeaustauscher geleitet, dessen wärmeabgebende Flächen den Träger für den Oxidationskatalysator bilden. Zur Reinigung wird die Frisch- oder Zuluft angesaugt, sodass sie den Wärmeaustauscher passiert, an dessen Oberfläche die giftigen und unangenehm riechenden Bestandteile oxidiert und in unschädliche unriechende Stoffe verwandelt werden. Das Auftreten einer zu starken Erwärmung kann dabei dadurch vermieden werden, dass die Kabinenluft umgewälzt und die Frischluftzufuhr beschränkt wird. Alternativen sind eine weitere Kühlung im Verdampfer einer derartigen Anlage oder eine Vorkühlung in einem Luftkühler, bevor sie dem Umluftstrom beigemischt oder über eine weitere Kühleinrichtung geleitet wird.

Die DE 601 21 848 T2 betrifft eine kompakte Heizungs-, Lüftungs- und Klimaanlage (HVAC-System) für Fahrzeuge. Das HVAC-System ist in einem Raum innerhalb eines Fahrgastraumes, der hinter einer Armaturentafel angeordnet ist, installiert. Das Gehäuse des Systems wird durch eine vordere Wand, angeordnet auf der Seite des Motorraumes, und einer hinteren Wand, angeordnet auf der Seite des Fahrgastraumes, gebildet. Im oberen Teil Gehäuse ist eine Gebläsekammer eingebunden, die einen Mehrflügel-Zentrifugallüfter enthält. Innerhalb des Gehäuses ist ein Luftkanal angeordnet, durch die die durch den Lüfter abgegebene Luft strömen kann, der aus einem absteigenden und einem Aufsteigenden Luftkanal sowie einem Verbindungsluftkanal gebildet wird. Innerhalb des absteigenden Luftkanals ist ein Wärmeaustauscher zum Kühlen der Luft eingebunden. Eine abwärts geneigte Bodenwand zwischen der vorderen und der hinteren Wand bildet ein Wassersammelteil zum Sammeln von kondensiertem Wasser, das durch einen Ablauf abgegeben wird.

Bei gepanzerten Fahrzeugen arbeiten die Kühlanlagen üblicherweise als Umluftkühlanlagen, d.h., die zu kühlende Luft wird aus dem Fahrzeuginnenraum abgesaugt und nach Abkühlung diesem wieder zugeführt. Zur Kühlung von frischer Außenluft muss diese an kontaminierten Orten daher zunächst in der Regel über eine ABC-Schutz-Filteranlage gereinigt in den Fahrzeuginnenraum geführt werden. Erst danach wird sie dann von der Kühlanlage aus dem Fahrzeuginnenraum angesaugt und gekühlt.

Der Erfindung liegt die Aufgabe zugrunde, eine einfache Vorrichtung der eingangs erwähnten Art anzugeben, bei der eine optimalere Kühlung der Luft in dem Fahrzeuginnenraum erfolgt als dieses bei bekannten gepanzerten Fahrzeugen bisher der Fall ist.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, mindestens zwei Kühlstufen zu verwenden, wobei der ersten Kühlstufe zu kühlende gereinigte Außenluft und der zweiten Kühlstufe die durch die erste Kühlstufe vorgekühlte Außenluft und aus dem Fahrzeuginnenraum abgesaugte Umluft zuführbar ist. Dabei sind die beiden Kühlstufen hintereinander angeordnet, derart, dass der Luftstrom bei der bestimmungsgemäßen Verwendung der Vorrichtung im Wesentlichen in Schwerkraftrichtung zunächst die erste Kühlstufe und dann die tiefer liegende zweite Kühlstufe durchströmt, wobei unterhalb der zweiten Kühlstufe ein Umlenkteil zur Umlenkung des gekühlten Luftstromes vorgesehen ist. In einer besonderen Variante ist im Bereich des Umlenkteiles ein Kondensatabscheider angeordnet, der das bei der bestimmungsgemäßen Verwendung der Vorrichtung anfallende und durch den Luftstrom aus den beiden Kühlstufen heraus gespülte Kondensat aufnimmt. Dadurch wird eine gute Kondensatabscheidung sichergestellt. Vorzugsweise ist das Umlenkteil derart ausgebildet, dass der Luftstrom um 180° umgelenkt wird, wobei das Gebläse dem Umlenkteil nachgeschaltet ist.

Durch die Anordnung der beiden Kühlstufen in Kombination mit dem Umlenkteil wird nunmehr erreicht, dass eventuell anfallendes Kondensat / Kondenswasser besser aufgefangen und abgeschieden werden kann, während es bei einem wie aus der Praxis bekannten Anlage - nämlich bei einem gegen die Schwerkraft gerichtete Luftstrom - erschwert ist.

Zur Reinigung der Außenluft kann der ersten Kühlstufe vorzugsweise eine ABC-Schutz-Filteranlage vorgeschaltet sein.

Vorgeschlagen wird somit eine mehrstufige Kampfraumkühlanlage im Gegenstromprinzip, wobei die wenigstens zwei Kühlstufen untereinander, dabei aber auch möglicherweise seitlich zueinander versetzt, in einer Kühlvorrichtung integriert sind. Dadurch kann in Weiterführung der Grundidee das aus den Kühlstufen möglicherweise anfallende Kondensat in einfacher Art und Weise durch die Schwerkraftrichtung - vorzugsweise unterstützt durch ein Gebläse für das Befördern der gekühlten Luft in den Fahrzeuginnenraum - am Boden der gemeinsamen Vorrichtung aufgefangen und abgeleitet werden.

Weitere Einzelheiten und Vorteile der Erfindung ergeben sich aus dem folgenden, anhand einer Figur erläuterten Ausführungsbeispiel.

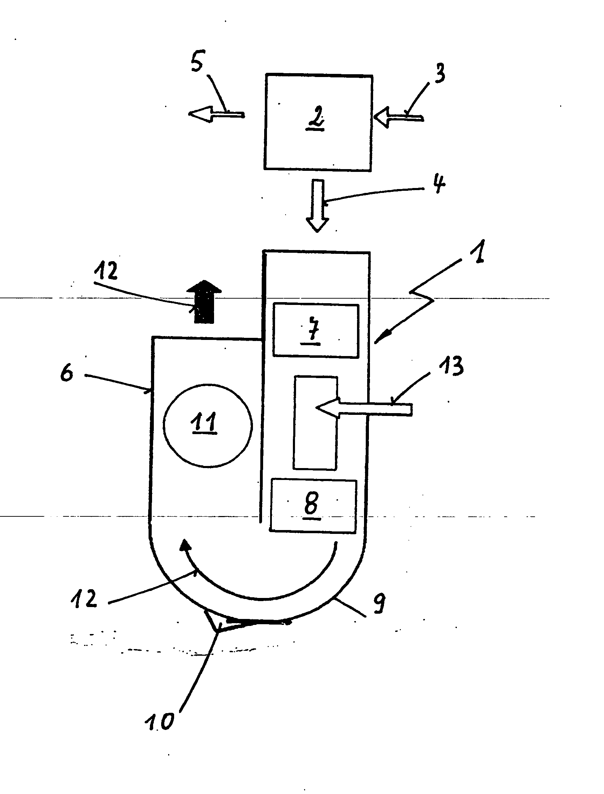

In der Figur ist schematisch eine Vorrichtung zur Kühlung der Luft in dem Fahrzeuginnenraum eines Panzers dargestellt. Der mit dem Bezugszeichen 1 versehenen Vorrichtung ist ein Luftsammler 2 vorgeschaltet, welcher, im Falle einer kontaminierten Umgebung gereinigte, Außenluft (angedeutet durch den Pfeil 3) von einer nicht dargestellten ABC-Schutz-Filteranlage erhält und einen ersten Anteil (angedeutet durch den Pfeil 4) der gereinigten Außenluft der Vorrichtung 1 sowie einen zweiten Anteil (angedeutet durch den Pfeil 5) der gereinigten Außenluft einer nicht dargestellten Heizanlage zur Verfügung stellt.

Die Vorrichtung 1 umfasst ein Gehäuse 6 mit zwei Kühlstufen 7 und 8, ein Umlenkteil 9 mit Kondensatabscheider 10 sowie ein ebenfalls in dem Gehäuse 6 sich an das Umlenkteil 9 anschließendes Gebläse 11, welches den gekühlten Luftstrom (angedeutet durch die beiden mit 12 gekennzeichneten Pfeile) über ein nicht dargestelltes Luftverteilersystem in den Fahrzeuginnenraum befördert.

Bei den Kühlstufen 7, 8 handelt es sich um an sich bekannte Einrichtungen, von denen in der Figur lediglich die Wärmetauscher dargestellt sind.

Wie der Figur zu entnehmen ist, wird der ersten Kühlstufe 7 von dem Luftsammler 2 der erste Anteil der zu kühlenden gereinigten Außenluft (Pfeil 4) und der zweiten Kühlstufe 8 die durch die erste Kühlstufe 7 vorgekühlte Außenluft sowie aus dem Fahrzeuginnenraum abgesaugte Umluft (angedeutet durch den Pfeil 13) zugeführt, die sich mit der vorgekühlten Außenluft vermischt.

Die Wärmetauscher der beiden Kühlstufen 7 und 8 sind derart hintereinander angeordnet, dass der durch das Gehäuse geführte Luftstrom bei der bestimmungsgemäßen Verwendung der Vorrichtung 1 im wesentlichen in Schwerkraftrichtung zunächst den Wärmetauscher der ersten Kühlstufe 7 und dann den tiefer liegenden Wärmetauscher der zweiten Kühlstufe 8 durchströmt. Dadurch wird erreicht, dass das bei der bestimmungsgemäßen Verwendung der Vorrichtung 1 anfallende Kondensat (Wasser) durch den Luftstrom aus den Wärmetauschern der beiden Kühlstufen 7 und 8 herausgespült wird und in den Kondensatabscheider 10 tropft.

Der gekühlte Luftstrom (Pfeil 12) wird durch das Umlenkteil 9 um 180° umgelenkt und gelangt über das Gebläse 11 zu dem nicht dargestellten Luftverteilersystem.

### Bezugszeichenliste

- 1: Vorrichtung
- 2: Luftsammler
- 3-5: Pfeile
- 6: Gehäuse
- 7: (erste) Kühlstufe
- 8: (zweite) Kühlstufe
- 9: Umlenkteil
- 10: Kondensatabscheider
- 11: Gebläse
- 12,13: Pfeile

## Patentansprüche

1. Vorrichtung zur Kühlung der Luft in dem Innenraum eines gepanzerten Fahrzeuges mit einem Gebläse (11) zur Förderung der gekühlten Luft über ein Luftverteilersystem in den Fahrzeuginnenraum, mit wenigstens zwei Kühlstufen (7, 8) umfasst, wobei der ersten Kühlstufe (7) zu kühlende gereinigte Außenluft und der zweiten Kühlstufe (8) die durch die erste Kühlstufe (7) vorgekühlte Außenluft und aus dem Fahrzeuginnenraum abgesaugte Umluft zuführbar ist; **dadurch gekennzeichnet, dass** die beiden Kühlstufen (7, 8) hintereinander angeordnet sind, derart, dass der Luftstrom bei der bestimmungsgemäßen Verwendung der Vorrichtung (1) im Wesentlichen in Schwerkraftrichtung zunächst die erste Kühlstufe (7) und dann die tiefer liegende zweite Kühlstufe (8) durchströmt.

2. Vorrichtung nach Anspruch 1, **dadurch gekennzeichnet, dass** unterhalb der zweiten Kühlstufe (8) ein Umlenkteil (9) zur Umlenkung des gekühlten Luftstromes vorgesehen ist.

3. Vorrichtung nach Anspruch 2, **dadurch gekennzeichnet, dass** im Bereich des Umlenkteiles (9) ein Kondensatabscheider (10) angeordnet ist, der das bei der bestimmungsgemäßen Verwendung der Vorrichtung (1) anfallende und durch den Luftstrom aus den beiden Kühlstufen (7, 8) herausgespülte Kondensat aufnimmt.

4. Vorrichtung nach Anspruch 2 oder 3, **dadurch gekennzeichnet, dass** das Umlenkteil (9) derart ausgebildet ist, das der Luftstrom um 180° umgelenkt wird.

5. Vorrichtung nach einem der Ansprüche 2 bis 4, **dadurch gekennzeichnet, dass** in Richtung des gekühlten Luftstromes das Gebläse (11) dem Umlenkteil (9) nachgeschaltet ist.

6. Vorrichtung nach einem der Ansprüche 1 bis 5, **dadurch gekennzeichnet, dass** zur Reinigung der Außenluft der ersten Kühlstufe (7) eine ABC-Schutz-Filteranlage vorgeschaltet ist.

## Claims

1. Device for cooling the air in the interior of an armoured vehicle, with a fan (11) for conveying the cooled air via an air distributor system into the vehicle interior, and with at least two cooling stages (7, 8), wherein the first cooling stage (7) can be supplied with cleaned external air which is to be cooled, and the second cooling stage (8) can be supplied with the external air pre-cooled by the first cooling stage (7) and with circulating air sucked out of the vehicle interior, **characterized in that** the two cooling stages (7, 8) are arranged one behind the other in such a manner that, during correct use of the device (1), the air stream first of all flows substantially in the direction of gravitational force through the first cooling stage (7) and then through the lower, second cooling stage (8).

2. Device according to Claim 1, **characterized in that** a deflecting part (9) for deflecting the cooled air stream is provided below the second cooling stage (8).

3. Device according to Claim 2, **characterized in that** a condensate collector (10) is arranged in the region of the deflecting part (9), said condensate collector receiving the condensate which arises during correct use of the device (1) and is rinsed out of the two cooling stages (7, 8) by the air stream.

4. Device according to Claim 2 or 3, **characterized in that** the deflecting part (9) is designed in such a manner that the air stream is deflected through 180°.

5. Device according to one of Claims 2 to 4, **characterized in that** the fan (11) is connected downstream of the deflecting part (9) in the direction of the cooled air stream.

6. Device according to one of Claims 1 to 5, **characterized in that**, in order to clean the external air, an ABC protection filter system is connected upstream of the first cooling stage (7).

## Revendications

1. Dispositif de refroidissement de l'air à l'intérieur d'un véhicule blindé avec une soufflante (11) pour transporter l'air refroidi à l'intérieur du véhicule via un système de répartition d'air, qui comprend au moins deux étages de refroidissement (7, 8), dans lequel l'air extérieur épuré à refroidir peut être envoyé au premier étage de refroidissement (7) et l'air extérieur pré-refroidi par le premier étage de refroidissement (7) et l'air ambiant aspiré depuis l'intérieur du véhicule peuvent être envoyés au deuxième étage de refroidissement (8), **caractérisé en ce que** les deux étages de refroidissement (7, 8) sont disposés l'un derrière l'autre, de telle manière que le courant d'air, lors de l'utilisation prévue du dispositif (1), parcourt essentiellement dans le sens de la gravité d'abord le premier étage de refroidissement (7) et ensuite le deuxième étage de refroidissement (8) situé plus bas.

2. Dispositif selon la revendication 1, **caractérisé en ce qu'**il est prévu en dessous du deuxième étage de refroidissement (8) une pièce de déviation (9) pour dévier le courant d'air refroidi.

3. Dispositif selon la revendication 2, **caractérisé en ce qu'**un séparateur de condensat (10) est disposé dans la région de la pièce de déviation (9), et recueille le condensat formé lors de l'utilisation prévue du dispositif (1) et emporté par le courant d'air provenant des deux étages de refroidissement (7, 8).

4. Dispositif selon la revendication 2 ou 3, **caractérisé en ce que** la pièce de déviation (9) est réalisée de telle manière que le courant d'air soit dévié de 180°.

5. Dispositif selon l'une quelconque des revendications 2 à 4, **caractérisé en ce que** la soufflante (11) est disposée en aval de la pièce de déviation (9) dans le sens du courant d'air refroidi.

6. Dispositif selon l'une quelconque des revendications 1 à 5, **caractérisé en ce qu'**un système de filtre de protection ABC est disposé en amont du premier étage de refroidissement (7) afin d'épurer l'air extérieur.
